# EUROPEAN PATENT SPECIFICATION

(11) **EP 4 207 452 B1**
(45) Date of publication and mention of the grant of the patent: **21.01.2026**
(21) Application number: 21895047.5
(22) Date of filing: 15.11.2021
(51) Int. Cl.: H01M 50/242, H01M 50/249, H01M 50/211

(54) **BATTERY MODULE, BATTERY PACK INCLUDING BATTERY MODULE, AND VEHICLE INCLUDING BATTERY PACK**
BATTERIEMODUL, BATTERIEPACK MIT DEM BATTERIEMODUL UND FAHRZEUG MIT DEM BATTERIEPACK
MODULE DE BATTERIE, BLOC-BATTERIE COMPRENANT UN MODULE DE BATTERIE ET VÉHICULE COMPRENANT UN BLOC-BATTERIE

(30) Priority: 23.11.2020 KR 20200158075
(43) Date of publication of application: 05.07.2023
(73) Proprietor: LG Energy Solution, Ltd., Seoul 07335 (KR)
(72) Inventor: KIM, Se-Ho, Daejeon 34122 (KR); JEONG, Sang-Yoon, Daejeon 34122 (KR); LEE, Jung-Hoon, Daejeon 34122 (KR)
(74) Representative: Hoffmann Eitle
(86) International application number: PCT/KR2021/016675
(87) International publication number: WO 2022/108279

(56) References cited:
- JP-A- 2017 196 959
- KR-A- 20130 123 762
- KR-A- 20170 013 005
- KR-A- 20200 022 793
- KR-B1- 102 018 301
- US-A1- 2018 097 211
- US-A1- 2018 337 376
- US-A1- 2020 194 753

## Description

### TECHNICAL FIELD

The present disclosure relates to a battery module, a battery pack including the battery module, and a vehicle including the battery pack.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery pack by using at least one battery module and adding other components.

In the case of a conventional battery module, it is important to apply a pressing force within a certain range to the battery cell in order to improve performance such as the lifespan of the battery cell. In addition, it is important to control the expansion of the battery cell, namely cell swelling.

Accordingly, it is demanded to find a way to provide a battery module, which may improve the performance of the battery cell and effectively control cell swelling, a battery pack including the battery module, and a vehicle including the battery pack.

US 2020/194753 A1 concerns a power storage device. The power storage device is an assembled battery composed by electrically connecting a plurality of secondary batteries. The plurality of secondary batteries are alternately arrayed with a plurality of spacers, composing a battery laminate in which the secondary batteries are stacked horizontally. The power storage device comprises a pair of end plates provided on both sides of the battery laminate. An elastic member is provided that elastically deforms with change of the volume of the secondary battery.

US 2018/337376 A1 concerns a battery module.

US 2018/097211 A1 concerns a battery unit.

### DISCLOSURE

### Technical Problem

The present disclosure is directed to providing a battery module, which may improve the performance of a battery cell and effectively control cell swelling, a battery pack including the battery module, and a vehicle including the battery pack.

### Technical Solution

In one aspect of the present invention, there is provided a battery module as defined in claim 1, comprising: a battery cell assembly including a plurality of battery cells stacked on each other; a base plate configured to support a lower side of the battery cell assembly; a cover plate spaced apart from the base plate and configured to cover an upper side of the battery cell assembly; and an elastic bead unit disposed between the cover plate and the battery cell assembly at the uppermost end of the battery cell assembly.

The elastic bead unit includes a contact plate disposed in contact with the battery cell assembly; and an elastic deformation unit disposed between the contact plate and the cover plate.

The elastic deformation unit includes a first elastic member disposed at least partially in contact with the contact plate; and a second elastic member disposed at least partially in contact with the first elastic member and disposed at least partially in contact with the cover plate.

The first elastic member and the second elastic member are provided in a concave-convex shape so that convex portions and concave portions are arranged alternately.

The battery module may further comprise at least one compression pad disposed between the plurality of battery cells.

The convex portion of the first elastic member may be disposed in contact with the convex portion of the second elastic member.

The at least one compression pad may be disposed at a center of the plurality of battery cells in a height direction of the plurality of battery cells.

The battery module may further comprise a pair of side beams configured to cover both sides of the battery cell assembly and connected to the base plate and the cover plate.

In addition, the present invention further provides a battery pack as defined in claim 6, comprising: at least one battery module according to the above embodiments; and a pack case configured to package the at least one battery module.

Moreover, the present invention further provides a vehicle as defined in claim 7, comprising at least one battery pack according to the above embodiments.

### Advantageous Effects

According to various embodiments as described above, it is possible to provide a battery module, which may improve the performance of a battery cell and effectively control cell swelling, a battery pack including the battery module, and a vehicle including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery module according to an embodiment of the present disclosure.
FIG. 2 is a diagram for illustrating an elastic bead unit of the battery module of FIG. 1.
FIG. 3 is a diagram for illustrating another elastic bead unit of the battery module of FIG. 1, which is not in accordance with the claimed invention.
FIG. 4 is a diagram for illustrating a cell swelling control mechanism of the battery module of FIG. 1.
FIG. 5 is a diagram for illustrating a battery module according to another embodiment of the present disclosure.
FIG. 6 is a diagram for illustrating a battery pack according to an embodiment of the present disclosure.
FIG. 7 is a diagram for illustrating a vehicle according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

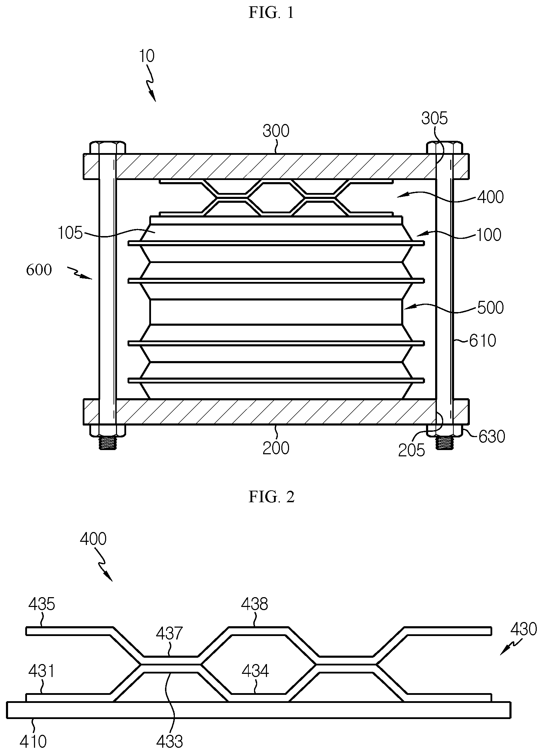

FIG. 1 is a diagram for illustrating a battery module according to an embodiment of the present disclosure.

Referring to FIG. 1, the battery module 10 includes a battery cell assembly 100, a base plate 200, a cover plate 300, and an elastic bead unit 400.

The battery cell assembly 100 includes a plurality of battery cells 105 stacked on each other.

The plurality of battery cells 105 are secondary batteries, and may be provided as a pouch-type secondary battery, a prismatic secondary battery, or a cylindrical secondary battery. Hereinafter, in this embodiment, the plurality of battery cells 105 will be described as pouch-type secondary batteries.

The base plate 200 supports a lower side of the battery cell assembly 100. Accordingly, the base plate 200 has a shape and size capable of supporting the lower side of the battery cell assembly 100.

The base plate 200 may include a beam fastening unit 205 for fastening with a side beam 600, explained later.

The cover plate 300 is spaced apart from the base plate 200, and covers an upper side of the battery cell assembly 100. Accordingly, the cover plate 300 has a shape and size capable of supporting the upper side of the battery cell assembly 100.

The cover plate 300 may include a beam fastening unit 305 for fastening with a side beam 600, explained later.

The elastic bead unit 400 is for controlling cell swelling of the battery cells 105 of the battery cell assembly 100, and is disposed between the cover plate 300 and the battery cell assembly 100. Specifically, the elastic bead unit 400 is disposed between the cover plate 300 and the battery cell 105 at the uppermost end of the battery cell assembly 100.

Hereinafter, the elastic bead unit 400 will be described in more detail.

FIG. 2 is a diagram for illustrating an elastic bead unit of the battery module of FIG. 1.

Referring to FIG. 2, the elastic bead unit 400 includes a contact plate 410 and an elastic deformation unit 430.

The contact plate 410 has a substantially flat plate shape, and is disposed in contact with the battery cell assembly 100. Specifically, the contact plate 410 may be disposed in contact with the battery cell 105 at the uppermost end of the battery cell assembly 100.

The elastic deformation unit 430 is disposed between the contact plate 410 and the cover plate 300.

The elastic deformation unit 430 includes a first elastic member 431 and a second elastic member 435.

The first elastic member 431 is disposed at least partially in contact with the contact plate 410. The first elastic member 431 is provided in a concave-convex shape, and convex portions 433 and concave portions 434 are arranged alternately. The convex portion 433 of the first elastic member 431 may be disposed in elastic contact with the convex portion 437 of the second elastic member 435, explained later.

The second elastic member 435 is disposed at least partially in contact with the first elastic member 431 and disposed at least partially in contact with the cover plate 300.

The second elastic member 435 is provided in a concave-convex shape, and convex portions 437 and concave portions 438 are arranged alternately. The convex portion 437 of the second elastic member 435 may be arranged in elastic contact with the convex portion 433 of the first elastic member 431.

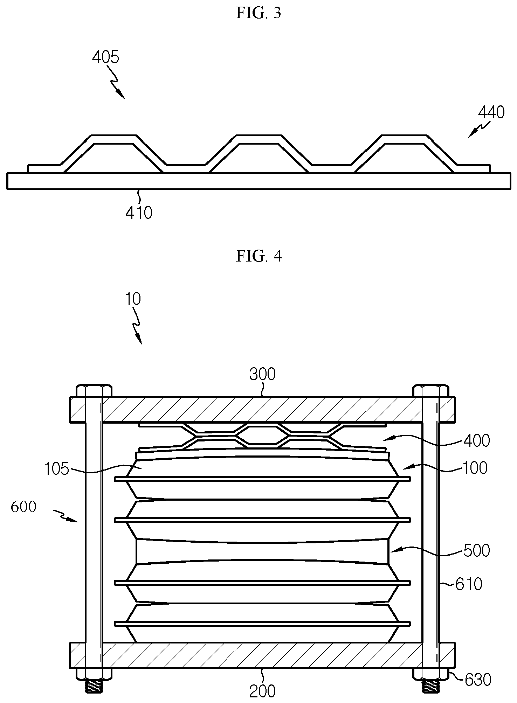

FIG. 3 is a diagram for illustrating another elastic bead unit of the battery module of FIG. 1, which is not in accordance with the claimed invention.

Referring to FIG. 3, the elastic bead unit 405 may include a contact plate 410 and an elastic deformation unit 440.

The contact plate 410 is substantially identical or similar to the former embodiment, and thus will not be described in detail.

The elastic deformation unit 440 may be provided as a single member, unlike the former embodiment. The elastic deformation unit 440 may be disposed at least partially in contact with the cover plate 300 of the former embodiment. The elastic deformation unit 440 is provided in a concave-convex shape, and convex portions and concave portions may be alternately arranged.

As described above, the elastic deformation unit 440 may be provided as a plurality of elastic members 431, 435 as in the elastic deformation unit 430 of the former embodiment, or may be provided as a single member as in this embodiment.

Referring to FIG. 1 again, the battery module 10 may include a compression pad 500 and a side beam 600.

The compression pad 500 is made of an elastic material having a predetermined elasticity, and may be disposed between the plurality of battery cells 105 of the battery cell assembly 100.

The compression pad 500 may be disposed at the center of the plurality of battery cells 105 in a height direction of the plurality of battery cells 105. The compression pad 500 may provide a predetermined pressing force toward the battery cells 105 between the base plate 200 and the cover plate 300 to improve the lifespan or the like of the battery cell assembly 100.

The side beam 600 may be provided as a pair.

The pair of side beams 600 cover both sides of the battery cell assembly 100, and may be connected to the base plate 200 and the cover plate 300.

The pair of side beams 600 may include a beam bolt 610 and a beam nut 630, respectively.

The beam bolt 610 is formed in a predetermined length, and may be fastened through the beam fastening unit 205 of the base plate 200 and the beam fastening unit 305 of the cover plate 300.

The beam nut 630 is fastened with the beam bolt 610 to stably fix the beam bolt 610 between the base plate 200 and the cover plate 300.

Hereinafter, the cell swelling control mechanism of the battery module 10 according to this embodiment will be explained in more detail.

FIG. 4 is a diagram for illustrating a cell swelling control mechanism of the battery module of FIG. 1.

Referring to FIG. 4, cell swelling may occur due to expansion or the like of the battery cells 105 of the battery cell assembly 100 of the battery module 10. At this time, if the base plate 200 or the cover plate 300 is broken or fractured due to the cell swelling, a greater risk may be caused.

In this embodiment, when the cell swelling occurs, the cell swelling may be buffered through the elastic bead unit 400 in the expansion direction of the battery cells 105. Accordingly, in this embodiment, when the cell swelling occurs, the pressure applied toward the base plate 200 and the cover plate 300 may be minimized by means of the elastic bead unit 400.

In other words, in this embodiment, when the cell swelling occurs, the pressing force of the battery cells 105 is absorbed by means of the elastic bead unit 400, so that the risk that the base plate 200 and the cover plate 300 are broken or ruptured may be minimized.

After all, in this embodiment, by means of the elastic bead unit 400, it is possible to control the cell swelling that corresponds to irreversible deformation of the battery cells 105. In addition, in this embodiment, the reversible deformation of the battery cells 105 may be controlled through the compression force and repulsion force of the compression pad 500.

Accordingly, in this embodiment, by means of the elastic bead unit 400 and the compression pad 500, it is possible to more efficiently control the battery cells 105 in both the reversible deformation and the irreversible deformation of the battery cells 105.

Therefore, in this embodiment, by means of the elastic bead unit 400 and the compression pad 500, the performance of the battery cells 105 may be improved, and the risk that the base plate 200 and the cover plate 300 are broken when the cell swelling occurs in the battery cells 105 may be significantly lowered.

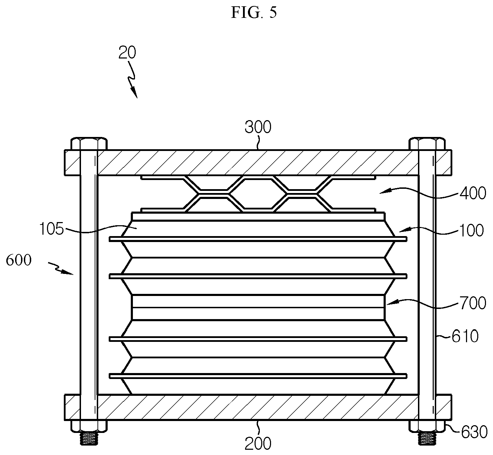

FIG. 5 is a diagram for illustrating a battery module according to another embodiment of the present disclosure.

The battery module 20 according to this embodiment is similar to the battery module 10 of the former embodiment. Thus, features substantially identical or similar to the former embodiment will not be described again, and hereinafter, features different from the former embodiment will be described in detail.

Referring to FIG. 5, the battery module 20 includes a battery cell assembly 100, a base plate 200, a cover plate 300, an elastic bead unit 400, a side beam 600, and a pair of compression pads 700.

The battery cell assembly 100 includes a plurality of battery cells 105.

The plurality of battery cells 105 are substantially identical or similar to the former embodiment and thus, hereinafter, will not be described again.

The base plate 200, the cover plate 300 and the elastic bead unit 400 are substantially identical or similar to those of the former embodiment, and thus will not be described in detail again.

The side beam 600 may include a beam bolt 610 and a beam nut 630.

The beam bolt 610 and the beam nut 630 are substantially identical or similar to those of the former embodiment, and thus will not be described in detail again.

The pair of compression pads 700 may be provided to be stacked on each other in the height direction of the battery cells 105.

In the case of this embodiment, the compression pad 700 is provided in plural, the compression force and the repulsion force of the compression pad 700 may be further increased.

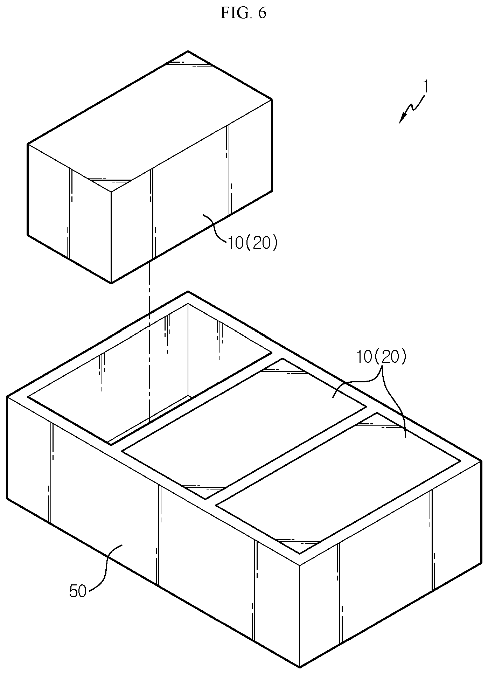

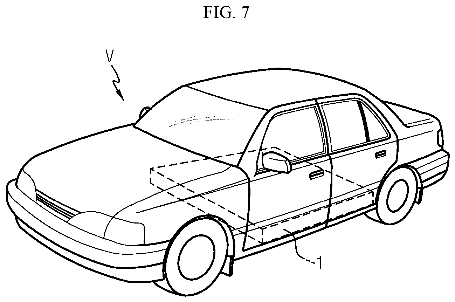

FIG. 6 is a diagram for illustrating a battery pack according to an embodiment of the present disclosure, and FIG. 7 is a diagram for illustrating a vehicle according to an embodiment of the present disclosure.

Referring to FIGS. 6 and 7, a battery pack 1 includes at least one battery module 10, 20 and a pack case 50 for packaging the at least one battery module 10, 20 according to the former embodiment.

The battery pack 1 may be provided to a vehicle V as a fuel source of the vehicle. As an example, the battery pack 1 may be provided to an electric vehicle, a hybrid electric vehicle, and various other-type vehicles V capable of using the battery pack 1 as a fuel source.

In addition, the battery pack 1 may be provided in other devices, instruments or facilities such as an energy storage system using a secondary battery, in addition to the vehicle V.

As described above, the battery pack 1 of this embodiment and devices, instruments or facilities such as the vehicle, which have the battery pack 1, include the battery module 10, 20 as described above, and thus it is possible to implement a battery pack 1 having all the advantages of the battery module 10, 20 described above, or devices, instruments, facilities or the like such as the vehicle V, which have the battery pack 1.

According to various embodiments as described above, it is possible to provide the battery module 10, 20, which may improve the performance of the battery cell 105 and effectively control cell swelling, the battery pack 1 including the battery module 10, 20, and the vehicle V including the battery pack 1.

## Claims

1. A battery module (10, 20), comprising:
a battery cell assembly (100) including a plurality of battery cells (105) stacked on each other;
a base plate (200) configured to support a lower side of the battery cell assembly (100);
a cover plate (300) spaced apart from the base plate (200) and configured to cover an upper side of the battery cell assembly (100); and
an elastic bead unit (400) disposed between the cover plate (300) and the battery cell assembly (100) at the uppermost end of the battery cell assembly (100),
**characterized in that** the elastic bead unit (400) includes:
a contact plate (410) disposed in contact with the battery cell assembly (100); and
an elastic deformation unit (430) disposed between the contact plate (410) and the cover plate (300),
wherein the elastic deformation unit (430) includes:
a first elastic member (431) disposed at least partially in contact with the contact plate (410); and
a second elastic member (435) disposed at least partially in contact with the first elastic member (431) and disposed at least partially in contact with the cover plate (300), and
wherein the first elastic member (431) and the second elastic member (435) are provided in a concave-convex shape so that convex portions (433, 437) and concave portions (434, 438) are arranged alternately.

2. The battery module (10, 20) according to claim 1, further comprising:
at least one compression pad (500; 700) disposed between the plurality of battery cells (105).

3. The battery module (10, 20) according to claim 1,
wherein the convex portion (433) of the first elastic member (431) is disposed in contact with the convex portion (437) of the second elastic member (435).

4. The battery module (10, 20) according to claim 2,
wherein the at least one compression pad (500; 700) is disposed at a center of the plurality of battery cells (105) in a height direction of the plurality of battery cells (105).

5. The battery module (10) according to claim 1, further comprising:
a pair of side beams (600) configured to cover both sides of the battery cell assembly (100) and connected to the base plate (200) and the cover plate (300).

6. A battery pack (1), comprising:
at least one battery module (10, 20) as defined in claim 1; and
a pack case (50) configured to package the at least one battery module (10, 20).

7. A vehicle (V), comprising:
at least one battery pack (1) as defined in claim 6.

## Patentansprüche

1. Batteriemodul (10, 20), umfassend:
eine Batteriezellenanordnung (100), einschließend eine Vielzahl von Batteriezellen (105), die aufeinander gestapelt sind;
eine Grundplatte (200), die dazu ausgebildet ist, eine Unterseite der Batteriezellenanordnung (100) zu stützen;
eine Abdeckplatte (300), die von der Grundplatte (200) beabstandet ist und dazu ausgebildet ist, eine Oberseite der Batteriezellenanordnung (100) abzudecken; und
eine elastische Sicken-Einheit (400), die zwischen der Abdeckplatte (300) und der Batteriezellenanordnung (100) am obersten Ende der Batteriezellenanordnung (100) angeordnet ist,
**dadurch gekennzeichnet, dass** die elastische Sicken-Einheit (400) Folgendes einschließt:
eine Kontaktplatte (410), die in Kontakt mit der Batteriezellenanordnung (100) angeordnet ist; und
eine elastische Verformungseinheit (430), die zwischen der Kontaktplatte (410) und der Abdeckplatte (300) angeordnet ist,
wobei die elastische Verformungseinheit (430) Folgendes einschließt:
ein erstes elastisches Element (431), das mindestens teilweise in Kontakt mit der Kontaktplatte (410) angeordnet ist; und
ein zweites elastisches Element (435), das mindestens teilweise in Kontakt mit dem ersten elastischen Element (431) und mindestens teilweise in Kontakt mit der Abdeckplatte (300) angeordnet ist; und
wobei das erste elastische Element (431) und das zweite elastische Element (435) in einer konkav-konvexen Form bereitgestellt sind, sodass konvexe Abschnitte (433, 437) und konkave Abschnitte (434, 438) abwechselnd angeordnet sind.

2. Batteriemodul (10, 20) nach Anspruch 1, weiter umfassend:
mindestens ein Kompressionspolster (500; 700), das zwischen der Vielzahl von Batteriezellen (105) angeordnet ist.

3. Batteriemodul (10, 20) nach Anspruch 1,
wobei der konvexe Abschnitt (433) des ersten elastischen Elements (431) in Kontakt mit dem konvexen Abschnitt (437) des zweiten elastischen Elements (435) angeordnet ist.

4. Batteriemodul (10, 20) nach Anspruch 2,
wobei das mindestens eine Kompressionspolster (500; 700) in der Höhenrichtung der Vielzahl von Batteriezellen (105) im Zentrum der Vielzahl von Batteriezellen (105) angeordnet ist.

5. Batteriemodul (10) nach Anspruch 1, weiter umfassend:
ein Paar von Seitenholmen (600), die dazu ausgebildet sind, beide Seiten der Batteriezellenanordnung (100) abzudecken und mit der Grundplatte (200) und der Abdeckplatte (300) verbunden zu sein.

6. Batteriepack (1), umfassend:
mindestens ein Batteriemodul (10, 20), wie in Anspruch 1 definiert; und
ein Packgehäuse (50), das dazu ausgebildet ist, das mindestens ein Batteriemodul (10, 20) zu verpacken.

7. Fahrzeug (V), umfassend:
mindestens ein Batteriepack (1), wie in Anspruch 6 definiert.

## Revendications

1. Module de batterie (10, 20), comprenant :
un ensemble (100) de cellules de batterie incluant une pluralité de cellules de batterie (105) empilées les unes sur les autres ;
une plaque de base (200) configurée pour supporter un côté inférieur de l'ensemble (100) de cellules de batterie ;
une plaque de recouvrement (300) espacée de la plaque de base (200) et configurée pour recouvrir un côté supérieur de l'ensemble (100) de cellules de batterie ; et
une unité de perle élastique (400) disposée entre la plaque de recouvrement (300) et l'ensemble (100) de cellules de batterie, au niveau de l'extrémité la plus supérieure de l'ensemble (100) de cellules de batterie,
**caractérisé en ce que** l'unité de perle élastique (400) inclut :
une plaque de contact (410) disposée en contact avec l'ensemble (100) de cellules de batterie ; et
une unité de déformation élastique (430) disposée entre la plaque de contact (410) et la plaque de recouvrement (300),
dans lequel l'unité de déformation élastique (430) inclut :
un premier organe élastique (431) disposé au moins partiellement en contact avec la plaque de contact (410) ; et
un deuxième organe élastique (435) disposé au moins partiellement en contact avec le premier organe élastique (431) et disposé au moins partiellement en contact avec la plaque de recouvrement (300), et
dans lequel le premier organe élastique (431) et le deuxième organe élastique (435) sont prévus sous une forme concave-convexe de sorte que des portions convexes (433, 437) et des portions concaves (434, 438) sont agencées en alternance.

2. Module de batterie (10, 20) selon la revendication 1, comprenant en outre :
au moins un tampon de compression (500 ; 700) disposé entre la pluralité de cellules de batterie (105).

3. Module de batterie (10, 20) selon la revendication 1,
dans lequel la portion convexe (433) du premier organe élastique (431) est disposée en contact avec la portion convexe (437) du deuxième organe élastique (435).

4. Module de batterie (10, 20) selon la revendication 2,
dans lequel l'au moins un tampon de compression (500 ; 700) est disposé au centre de la pluralité de cellules de batterie (105) dans une direction de hauteur de la pluralité de cellules de batterie (105).

5. Module de batterie (10) selon la revendication 1, comprenant en outre :
une paire de poutres latérales (600) configurées pour recouvrir les deux côtés de l'ensemble (100) de cellules de batterie et reliées à la plaque de base (200) et à la plaque de recouvrement (300).

6. Bloc-batterie (1), comprenant :
au moins un module de batterie (10, 20) tel que défini dans la revendication 1 ; et
un boîtier de bloc (50) configuré pour emballer l'au moins un module de batterie (10, 20).

7. Véhicule (V), comprenant :
au moins un bloc-batterie (1) tel que défini dans la revendication 6.
